# FASCICULE DE BREVET EUROPEEN

(11) **EP 0 699 499 B1**
(45) Date de publication et mention de la délivrance du brevet: **22.10.1997**
(21) Numéro de dépôt: 95401897.4
(22) Date de dépôt: 16.08.1995
(51) Int. Cl.: B23K 9/028

(54) **Procédé de réparation d'une liaison soudée hétérogène entre une tubulure d'un composant d'un réacteur nucléaire et une tuyauterie**
Reparaturverfahren einer heterogenen Schweissverbindung zwischen einem Stutzen eines Nuklearreaktorbestandteils und einer Rohrleitung
Repair method for a heterogeneous welded connection between a connecting piece of a nuclear reactor component and a pipe

(30) Priorité: 30.08.1994 FR 9410434
(43) Date de publication de la demande: 06.03.1996
(73) Titulaire: FRAMATOME, 92400 Courbevoie (FR)
(72) Inventeur: Batistoni, Michel, F-71640 Dracy Lefort (FR); Alter, Daniel, F-92100 Boulogne-Billancourt (FR); Gilbert-Desvallons, Eric, F-71380 Saint-Marcel (FR)
(74) Mandataire: Bouget, Lucien

(56) Documents cités:
- EP-A- 0 104 325
- EP-A- 0 131 237
- EP-A- 0 433 179
- FR-A- 2 685 950
- FR-A- 2 692 972
- US-A- 4 703 885
- US-A- 5 132 078

## Description

L'invention concerne un procédé de réparation d'une liaison soudée hétérogène entre une tubulure d'un composant d'un réacteur nucléaire en acier de construction ferritique faiblement allié et une tuyauterie en acier inoxydable austénitique.

Les réacteurs nucléaires, et en particulier les réacteurs nucléaires à eau sous pression, comportent des composants tels que la cuve du réacteur, les générateurs de vapeur et le pressuriseur qui sont réalisés en acier de construction à haute résistance faiblement allié, revêtus intérieurement d'une couche d'acier inoxydable et reliés, par l'intermédiaire d'une ou plusieurs tubulures, à une ou plusieurs tuyauteries en acier inoxydable austénitique constituant par exemple des canalisation de liaison au circuit primaire du réacteur.

La cuve d'un réacteur nucléaire présente une forme générale cylindrique et comporte une virole porte-tubulures dans laquelle sont formées un ensemble de tubulures permettant le raccordement de la cuve aux tuyauteries des différentes boucles.

Les générateurs de vapeur des réacteurs nucléaires à eau sous pression comportent une boîte à eau ayant une paroi de forme hémisphérique constituant la partie inférieure du générateur de vapeur, dans laquelle sont formées des tubulures qui sont reliées par soudage à deux canalisations du circuit primaire du réacteur.

Le pressuriseur d'un réacteur nucléaire à eau sous pression comporte une enveloppe de forme générale cylindrique ayant deux fonds bombés, le fond inférieur présentant une tubulure de raccordement au circuit primaire du réacteur nucléaire par l'intermédiaire d'une tuyauterie d'expansion en acier inoxydable austénitique, le fond supérieur étant raccordé de la même manière à d'autres tuyauteries en acier inoxydable austénitique.

Dans tous les cas, les tubulures de raccordement du composant qui sont en acier de construction et revêtues intérieurement d'acier inoxydable doivent être fixées par soudage bout à bout sur une tuyauterie en acier inoxydable austénitique.

Il est donc nécessaire de réaliser une soudure de jonction hétérogène entre la tubulure et la tuyauterie, cette soudure hétérogène étant généralement réalisée en utilisant un alliage de nickel comme métal d'apport pour le remplissage d'un chanfrein ménagé entre la tubulure et la tuyauterie ou entre la tubulure et un tronçon intermédiaire de raccordement en acier inoxydable austénitique.

Préalablement à la réalisation de la soudure hétérogène entre la tubulure et la tuyauterie ou le tronçon intermédiaire, il est nécessaire de déposer une couche épaisse d'alliage de nickel, souvent nommée "beurrage", sur la partie d'extrémité de la tubulure constituant une surface de délimitation du chanfrein dans lequel on dépose le métal d'apport, lors du soudage.

Des contrôles effectués par ressuage de la zone de liaison hétérogène entre les tubulures et les tuyauteries des réacteurs nucléaire à eau sous pression ont mis en évidence, dans certains cas, des défauts dans ces zones de liaison.

Bien que les défauts détectés à ce jour ne portent pas atteinte réellement à la sureté de la liaison soudée en ce qui concerne son étanchéité et sa résistance, il est préférable d'envisager des réparations des liaisons soudées présentant des défauts, de manière à éviter tout risque d'évolution de ces défauts pendant l'utilisation du réacteur nucléaire, les tubulures et tuyauteries étant soumises au contact de l'eau sous pression du réacteur à très haute température et sous une très forte pression.

Une opération de réparation de la liaison soudée hétérogène entre une tubulure et une tuyauterie en acier inoxydable austénitique présente des difficultés, du fait que le composant et la tuyauterie ont été activés pendant le fonctionnement du réacteur nucléaire et qu'il faut en conséquence effectuer la réparation en zone irradiée. De plus, la réparation qui pose des problèmes métallurgiques important doit être effectuée dans une zone généralement exiguë à proximité du composant logé dans le bâtiment du réacteur. Il est donc nécessaire de réaliser les opérations de réparation en utilisant des dispositifs de soudage automatique et en diminuant les temps d'intervention en zone fortement irradiée.

Pour refaire la soudure hétérogène, il est d'autre part nécessaire d'effectuer un usinage de l'extrémité de la tubulure et de revêtir l'extrémité réusinée par une couche de beurrage en alliage de nickel.

Il faut également reconstituer la couche de revêtement inoxydable destinée à venir en contact avec l'eau sous pression du réacteur nucléaire, à l'intérieur de la liaison soudée.

Les opérations de réparation sont donc généralement très délicates et très difficiles à mettre en oeuvre.

Dans le cas de la réparation de la liaison soudée de la ligne d'expansion d'un pressuriseur, il est également nécessaire de tenir compte de la présence d'une manchette thermique dans une disposition coaxiale à l'intérieur de la tubulure dans sa zone de jonction avec la tuyauterie.

Dans tous les cas, il est nécessaire de contrôler soigneusement la soudure hétérogène réalisée lors de la réparation et de faciliter les inspections ultérieures appelées "inspections en service" auxquelles cette zone est soumise, ce qui est difficile à mettre en oeuvre, en particulier dans le cas où la tubulure comporte une manchette thermique.

Jusqu'ici, on ne connaissait pas de procédé de réparation d'une liaison soudée hétérogène entre une tubulure et une tuyauterie qui puisse être mise en oeuvre de manière simple, avec une qualité parfaite de la réparation et une possibilité de contrôle de la soudure hétérogène réalisée.

Le but de l'invention est donc de proposer un procédé de réparation d'une liaison soudée hétérogène entre une tubulure d'un composant d'un réacteur nucléaire en acier de construction faiblement allié, appelé acier ferritique, et une tuyauterie en acier inoxydable austénitique, ce procédé pouvant être réalisé de manière simple, avec une qualité d'exécution parfaite et des possibilités de contrôle simple des soudures réalisées et en particulier de la soudure hétérogène entre l'acier ferritique et l'acier austénitique.

Dans ce but :
- on découpe et on sépare de la tubulure et de la tuyauterie un tronçon tubulaire de liaison comportant une partie au moins de la liaison soudée,
- on réalise un tronçon tubulaire de remplacement en acier inoxydable austénitique ayant une longueur adaptée à la longueur axiale du tronçon de liaison,
- on soude bout à bout par un procédé de soudage à joint étroit une première extrémité du tronçon de remplacement sur l'extrémité libre de la tubulure séparée du tronçon de liaison, de manière qu'une seconde extrémité libre du tronçon de remplacement soit disposée en vis-à-vis de l'extrémité libre laissée en attente de la tuyauterie, et
- on raccorde par soudage la seconde extrémité du tronçon de remplacement à l'extrémité laissée en attente de la tuyauterie en acier inoxydable austénitique, pour refermer complètement l'espace entre la seconde extrémité du tronçon de remplacement et la tuyauterie.

Afin de bien faire comprendre l'invention, on va maintenant décrire, à titre d'exemple non limitatif, en se référant aux figures jointes en annexe, un mode de réalisation du procédé de réparation suivant l'invention, dans le cas de la liaison soudée entre la tubulure d'un pressuriseur et la tuyauterie d'expansion de ce pressuriseur reliée à une canalisation du circuit primaire d'un réacteur nucléaire.

La figure 1 est une vue partielle en élévation de la partie inférieure du pressuriseur et de la tuyauterie d'expansion.

Les figures 2A, 2B et 2C sont des vues en coupe axiale d'une partie du pressuriseur et de sa tuyauterie d'expansion, au cours de différentes phases successives du procédé de réparation suivant l'invention.

Les figures 3A, 3B et 3C sont des vues en élévation et en coupe partielle d'un pressuriseur, d'une cuve et d'un générateur de vapeur et de leurs tubulures de raccordement.

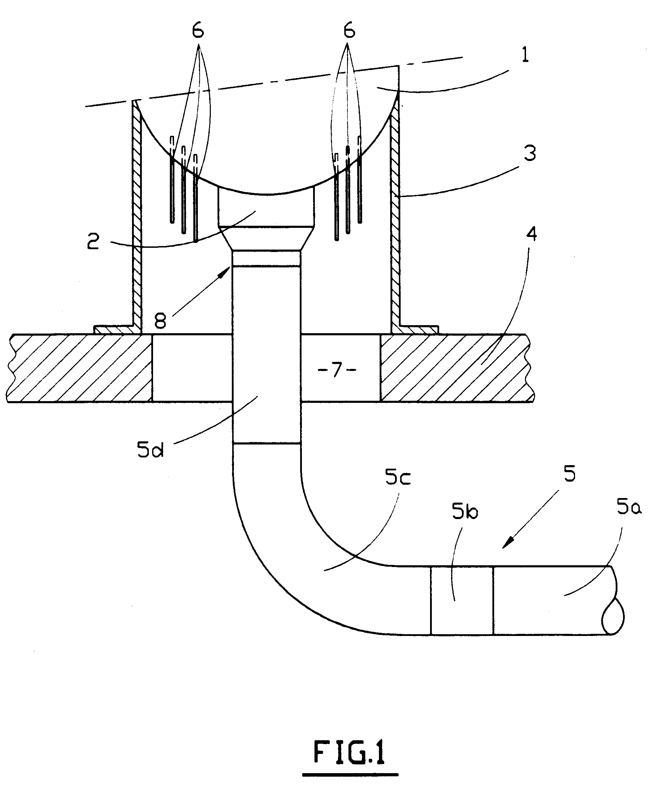

Sur la figure 1, on voit la partie inférieure 1 de l'enveloppe d'un pressuriseur comportant un fond de forme hémisphérique reposant par l'intermédiaire d'un support 3 sur un plancher 4 du bâtiment d'un réacteur nucléaire à eau sous pression.

Une tubulure 2 solidaire du fond du pressuriseur dans sa partie centrale permet d'assurer le raccordement entre le pressuriseur et une tuyauterie d'expansion 5 reliée, à l'une de ses extrémités, à la tubulure 2 et, à son extrémité opposée non représentée, à une canalisation du circuit primaire du réacteur nucléaire. La tuyauterie d'expansion 5 met en communication le volume intérieur du pressuriseur avec une branche de l'une des boucles du circuit primaire. La tuyauterie 5 assure la liaison entre le circuit primaire et le volume intérieur du pressuriseur dans lequel pénètrent, à travers le fond bombé, des cannes chauffantes 6 reliées à une source électrique et permettant de participer à la régulation de pression du circuit primaire rempli d'eau, par dégagement de chaleur et de maîtriser l'évaporation dans le pressuriseur d'un réacteur nucléaire à eau sous pression.

Par l'intermédiaire du pressuriseur dont le volume intérieur communique avec le circuit primaire, on assure le maintien en pression de l'eau de refroidissement du circuit primaire.

La tuyauterie d'expansion 5 comporte une branche droite 5a sensiblement horizontale qui est reliée, par l'intermédiaire d'un embout 5b et d'un coude 5c, à un tronçon 5d sensiblement vertical passant à travers le plancher 4 de support du pressuriseur 1 et reliée à son extrémité supérieure à la tubulure 2 du pressuriseur.

La tuyauterie d'expansion 5 qui est fixée par soudage sur une canalisation du circuit primaire est réalisée en une nuance d'acier identique à la nuance d'acier dans laquelle sont réalisées les canalisations du circuit primaire. Généralement, les canalisations du circuit primaire et la tuyauterie d'expansion 5 sont en un acier inoxydable austénitique à faible teneur en carbone.

La paroi du pressuriseur 1 et la tubulure 2 sont en un acier de construction faiblement allié tel que l'acier 16 MND 5 à 0,16 % de carbone.

De ce fait, la soudure 8 entre l'extrémité du tronçon vertical 5d de la tuyauterie d'expansion 5 et la tubulure 2 est une soudure hétérogène joignant deux aciers de nuances très différentes.

Cette jonction 8 par soudure hétérogène est généralement appelée liaison bimétallique.

Par la suite, pour distinguer les aciers constituant les composants chaudronnés tels que les pressuriseurs et leurs tubulures de jonction, des aciers inoxydables austénitiques constituant les tuyauteries de liaison, on désignera ces aciers comme aciers ferritiques.

On effectue, dans le cadre du contrôle des composants des réacteurs nucléaires, un contrôle périodique de la liaison bimétallique entre la tubulure du pressuriseur et la tuyauterie d'expansion.

Dans le cas où des anomalies sont décelées au niveau de cette liaison bimétallique, par exemple dans le cas où l'on décèle des fissures ou amorces de fissure par ressuage ou gammagraphie réalisés lors du suivi en service ou lors des contrôles systématiques, il peut être nécessaire d'effectuer une réparation de la liaison soudée entre la tubulure et la tuyauterie, de manière à obtenir une liaison bimétallique exempte de défaut.

Cette réparation peut être effectuée de manière avantageuse par le procédé selon l'invention.

De manière générale, ce procédé consiste à découper et à séparer de la tubulure et de la tuyauterie un tronçon de liaison entre la tubulure et la tuyauterie comportant une partie au moins de la liaison bimétallique 8, puis à fixer par soudure un tronçon de remplacement sur la tubulure et sur la tuyauterie.

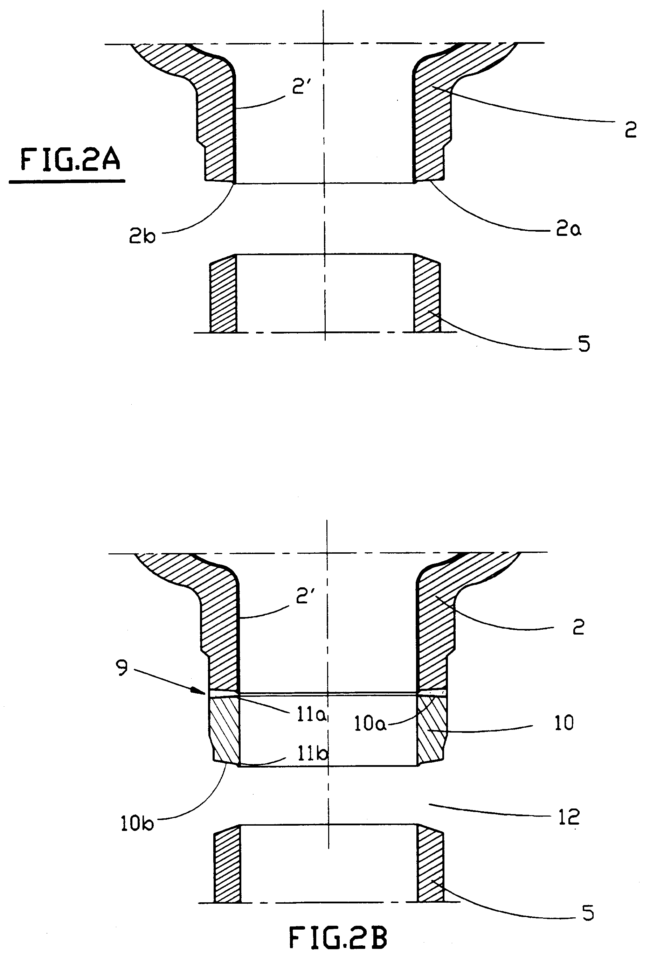

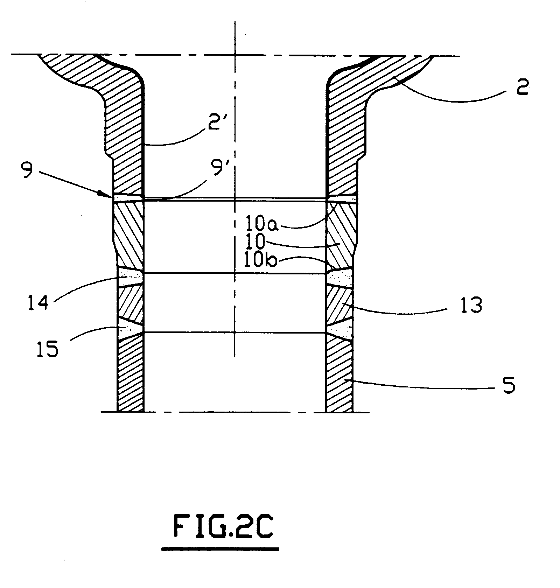

Comme représenté sur la figure 2A, pour effectuer une opération de réparation de la liaison bimétallique 8, on réalise sur le site du réacteur nucléaire, dans un premier temps, le découpage d'un tronçon de liaison de la tubulure 2 et de la tuyauterie 5, ce tronçon de liaison comportant tout ou partie de la liaison bimétallique 8.

Préalablement au découpage du tronçon à remplacer, on effectue des relevés dimensionnels pour définir de façon précise la position des zones de coupe et les dimensions à donner au tronçon de remplacement en acier inoxydable.

En outre, pendant l'opération de découpage, on immobilise la tuyauterie, de manière à obtenir une coupe précise et à éviter tout déplacement de la tuyauterie à l'issue de la coupe.

On réalise une première coupe de séparation de la tubulure 2 et de la tuyauterie d'expansion 5, au niveau de la liaison bimétallique 8, au plus près de la tubulure 2 en acier ferritique.

On réalise une seconde coupe de la tuyauterie 5, par exemple au-dessus du coude 5c, ou dans la zone de la soudure de liaison 5c-5d ou dans la zone 5b-5c de façon à libérer l'accès dans l'axe de la tubulure (ce qui évite d'écarter la ligne d'expansion par la suite).

Le tronçon tubulaire séparé de la tubulure et de la tuyauterie est évacué avec la manchette thermique et éliminé.

Le procédé de réparation suivant l'invention consiste en particulier à fixer un tronçon de remplacement en acier inoxydable austénitique par soudage bout à bout à l'extrémité de la tubulure.

Sur la figure 2B, on voit le tronçon de remplacement 10 en acier inoxydable austénitique qui est généralement identique à la nuance de l'acier de la tuyauterie 5.

Le tronçon de remplacement 10 en acier inoxydable présente une longueur adaptée à la longueur du tronçon de liaison qui a été découpé et éliminé. Cette longueur peut être inférieure, sensiblement égale ou légèrement supérieure à la longueur du tronçon de liaison qui a été découpé. Dans le cas où la longueur du tronçon de remplacement est supérieure à la longueur du tronçon de laision, pour tenir compte des retraits des soudures, la canalisation doit être déplacée pour permettre la mise en place du tronçon de remplacement. Le tronçon de remplacement comporte deux parties successives, suivant sa longueur, ayant des épaisseurs différentes. Une première partie ou partie supérieure du tronçon 10 présente une épaisseur sensiblement égale à l'épaisseur de la tubulure 2 dans la zone de raccordement et une seconde partie ou partie inférieure du tronçon de remplacement 10 une épaisseur sensiblement égale à l'épaisseur de la tuyauterie 5.

Le tronçon 10 est usiné à ses extrémités longitudinales de manière qu'on constitue deux bords chanfreinés 10a et 10b ayant une forme sensiblement tronconique, terminés radialement vers l'intérieur du tronçon de remplacement 10, par un rebord respectif 11a ou 11b en saillie dans la direction axiale vers l'extérieur.

Préalablement au raccordement du tronçon en acier inoxydable 10 par une soudure 9, comme représenté sur la figure 2B, on usine la partie d'extrémité libre de raccordement de la tubulure 2, d'une part pour éliminer le métal de beurrage déposé sur cette extrémité de la tubulure et la zone affectée thermiquement lors de la constitution de la première liaison bi-métallique avant le soudage du tronçon vertical de la canalisation 5, lors du montage du pressuriseur et d'autre part pour réaliser un bord chanfreiné incliné 2a terminé radialement vers l'intérieur de la tubulure par un rebord 2b en saillie vers l'extérieur dans la direction axiale.

On réalise également l'usinage de l'extrémité de la tuyauterie 5 qui a été découpée, de manière à obtenir un très bon état de surface et un bord chanfreiné de raccordement.

Dans une deuxième phase, comme représenté sur la figure 2B, on met en place le tronçon de remplacement 10 en-dessous et dans le prolongement de la tubulure 2, de manière que les bords chanfreinés 2a et 10a délimitent une cavité annulaire dans laquelle on dépose un métal de soudage 9 par soudage en corniche, la tête de soudage étant mise en rotation autour de l'axe vertical de la tubulure 2 et du tronçon 10.

Le procédé de soudage mis en oeuvre pour le raccordement du tronçon de remplacement 10 sur la tubulure 2 est un soudage du type à joint étroit qui peut être réalisé sans dépôt préalable d'une couche de beurrage sur la partie d'extrémité de la tubulure 2.

Le procédé de soudage à joint étroit qui a été utilisé en particulier pour le raccordement des tubulures de générateurs de vapeur de remplacement aux canalisations du circuit primaire, dans le cas d'opérations de remplacement intégral de générateur de vapeur, se caractérise par une cavité de soudage (appelée chanfrein de soudage) entre les pièces à joindre présentant une très faible ouverture, de sorte que la largeur maximale du chanfrein de soudage, au niveau de la surface externe des pièces à joindre, reste faible et très inférieure à la largeur habituelle maximale des chanfreins de soudage de pièces épaisses.

Cette largeur est telle qu'on peut réaliser le dépôt du métal de soudage à l'intérieur du chanfrein par couches successives comportant chacune un seul cordon de soudure. On évite ainsi d'avoir à juxtaposer plusieurs cordons de soudure à l'intérieur du chanfrein pour réaliser le dépôt du métal de soudure.

De manière générale, le chanfrein de soudage, dans le cas du soudage à joint étroit, présente une section méridienne dont les bords latéraux usinés dans l'épaisseur des pièces à joindre sont inclinés par rapport à un plan perpendiculaire à l'axe des pièces à joindre bout à bout d'un angle moyen inférieur à 5°. En outre, la largeur maximale du chanfrein du côté externe des pièces est inférieure à 15 mm.

Dans le cas du procédé suivant l'invention, on usine donc les bords chanfreinés 2a de la tubulure 2 et 10a du chanfrein de remplacement de manière à obtenir une cavité annulaire entre les pièces 2 et 10 qui présente les caractéristiques géométriques d'un chanfrein de soudage à joint étroit.

Le soudage du tronçon de remplacement 10 en acier inoxydable est effectué par dépôt d'un alliage de nickel dans le chanfrein de soudage, de manière à obtenir le joint étroit 9 de jonction entre les pièces 2 et 10.

De préférence, on réalise des premières passes de dépôt de métal dans le fond 9' du chanfrein, c'est-à-dire dans la partie étroite du chanfrein voisine des rebords 2b et 11a, en utilisant un alliage de nickel tel que l'alliage 52 permettant de réaliser le dépôt de couches min-ces résistant à la corrosion prolongeant la couche interne en acier inoxydable 2' de la tubulure 2 pour obtenir une protection de l'envers de la soudure dans la partie interne des pièces 2 et 10.

Au lieu d'un alliage de nickel du type 52, on peut également déposer des couches d'acier inoxydable constituant un dépôt anti-corrosion sur l'envers de la soudure 9.

La soudure 9 est ensuite complétée par dépôt d'un alliage de nickel tel que l'alliage 82.

On a pu montrer que, de manière inattendue, en utilisant la technique de soudage à joint étroit et un alliage de nickel, il est possible de réaliser la soudure hétérogène entre la tubulure 2 en acier ferritique et la tubulure 10 en acier austénitique, sans avoir à réaliser préalablement un revêtement par beurrage de l'extrémité libre de jonction de la tubulure 2.

Après réalisation sur le site du réacteur nucléaire de la soudure hétérogène 9, on effectue in situ un traitement thermique de détensionnement de la soudure 9 et des zones des pièces 2 et 10 affectées thermiquement.

Dans le mode de réalisation représenté sur la figure 2B, le tronçon de remplacement 10 présente une longueur sensiblement inférieure à la longueur du tronçon de liaison qui a été découpé et éliminé, de sorte qu'il subsiste un espace libre 12 entre l'extrémité supérieure de la tuyauterie 5 et l'extrémité inférieure 10b du tronçon de remplacement 10.

Il est possible de faire pénétrer un outillage par l'espace libre 12 pour effectuer diverses opérations par l'intérieur de la tubulure et en particulier le chauffage et le traitement thermique de la soudure 9.

Comme représenté sur la figure 2C, on réalise la jonction de l'extrémité 10b du tronçon de remplacement 10 avec l'extrémité supérieure libre laissée en attente de la tuyauterie 5, en utilisant un tronçon de fermeture complémentaire 13 en acier inoxydable austénitique qui est intercalé entre l'extrémité 10b de la pièce de remplacement 10 et l'extrémité supérieure de la tuyauterie 5, de manière que les parties d'extrémité du tronçon de fermeture 13 délimitent avec la partie d'extrémité 10b du tronçon de remplacement 10 et avec la partie d'extrémité supérieure de la tuyauterie 5, deux chanfreins de soudage dans lesquels on dépose un métal de soudure constitué par un alliage de nickel ou un acier inoxydable austénitique pour constituer les joints de soudure 14 et 15 assurant la fermeture complète de l'espace entre le tronçon de remplacement 10 et la tuyauterie 5.

Les bords chanfreinés du tronçon de fermeture 13, le bord 10b de la pièce de remplacement 10 et le bord supérieur de la tuyauterie 5 sont usinés de manière à délimiter entre eux deux chanfreins de soudage standard qui sont remplis de métal de soudure par une technique connue dans le cas des soudures homogènes de pièces tubulaires en acier inoxydable austénitique.

Dans ce cas, les soudures 14 et 15 ne constituent pas des joints étroits, mais une variante consiste à réaliser deux soudures TIG orbitales à joint étroit plus économiques et plus rapides à exécuter de manière automatique.

Du fait qu'il n'est pas nécessaire d'effectuer une reprise et un revêtement inoxydable de la soudure hétérogène 9 par l'intérieur de la tubulure 2, il est possible de prévoir une pièce de remplacement 10 dont la longueur n'est que très peu inférieure à la longueur du tronçon de liaison qui a été découpé et éliminé lors de la première phase du procédé, de sorte qu'après la mise en place et le soudage du tronçon de remplacement 10 sur la tubulure, il subsiste entre le bord chanfreiné inférieur 10b de la pièce de remplacement 10 et le bord supérieur de la tuyauterie 5, un espace correspondant à un chanfrein large dans lequel on peut déposer un métal de soudage tel qu'un alliage de nickel ou un acier inoxydable, pour réaliser un soudage homogène du tronçon de remplacement 10 directement sur la tuyauterie 5.

Il peut être nécessaire, dans ce cas, de prévoir un tronçon de remplacement d'une longueur sensiblement égale ou supérieure à la longueur du tronçon découpé, pour tenir compte des retraits des soudures. Pour la mise en place du tronçon de remplacement, on doit alors réaliser le déplacement par bridage de l'extrémité libre de la tuyauterie. On évite ainsi d'utiliser un tronçon de fermeture complémentaire du tronçon de remplacement 10 et de réaliser deux soudures de raccordement du tronçon de fermeture au tronçon de remplacement et à la tuyauterie 5, respectivement.

Généralement, la chemise thermique de la tubulure qui est disposée coaxialement à l'intérieur de la tubulure dans la zone de liaison et qui a été éliminée au moins partiellement lors du découpage du tronçon de liaison dans la phase initiale du procédé n'est pas remise en place, ce qui permet d'effectuer plus facilement les contrôles ultérieurs de la liaison bimétallique, après un redémarrage du réacteur nucléaire et un fonctionnement d'une certaine durée.

En effet, la réalisation d'une soudure à joint étroit en alliage de nickel entre la tubulure et le tronçon de remplacement en acier inoxydable austénitique permet de rendre non indispensable l'utilisation d'une manchette thermique.

Le procédé suivant l'invention permet donc de réaliser de manière simple et rapide, une réparation de grande qualité d'une liaison bimétallique, en évitant en particulier la nécessité de la réalisation d'une couche de beurrage sur l'extrémité de la tubulure avant d'effectuer la soudure hétérogène.

On peut également grâce au procédé suivant l'invention réaliser une couche de protection anti-corrosion dans la zone de racine de la soudure, ce qui permet d'éviter des opérations de reprise et de revêtement ultérieur de l'envers de la soudure hétérogène.

La rapidité d'exécution de la réparation peut encore être accrue lorsqu'on n'utilise pas de tronçon de fermeture, généralement désigné par le terme anglais "closer", entre le tronçon de remplacement et la tuyauterie.

Dans ce cas, bien entendu, il est nécessaire de réaliser un tronçon de remplacement dont la longueur est parfaitement déterminée à partir des mesures effectuées au départ sur la tuyauterie d'expansion et en tenant compte des usinages de la partie d'extrémité de la tubulure et de la tuyauterie, postérieurement au découpage du tronçon de liaison et des retraits des soudures.

L'extrémité de la tuyauterie 5 peut être déplacée de manière à faciliter la mise en place du tronçon de remplacement, puis remise en position précise de soudage, pour réaliser la soudure finale de jonction en tenant compte des retraits des soudures.

Après réalisation des soudures et en particulier après la réalisation de la soudure hétérogène, on effectue un contrôle de ces soudures.

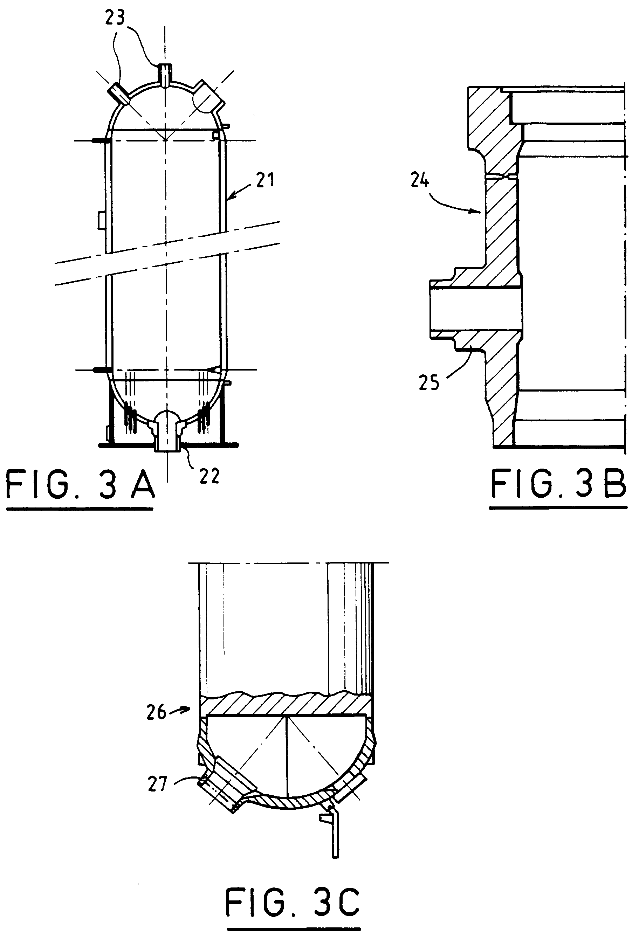

Sur les figures 3A, 3B et 3C, on a représenté de manière schématique et partielle trois composants d'un réacteur nucléaire dont les liaisons soudées à des tuyauteries en acier inoxydable, par l'intermédiaire de tubulures, peuvent être réparées par le procédé de l'invention.

Sur la figure 3A, on voit un pressuriseur 21 d'un réacteur nucléaire à eau sous pression comportant dans sa partie inférieure une tubulure 22 de raccordement à une ligne d'expansion identique à la tubulure 2 du pressuriseur 1 représenté sur la figure 1. Le pressuriseur 21 comporte de plus, dans son fond supérieur, des tubulures 23 de raccordement à une ligne de décharge et à une ligne d'aspersion en acier inoxydable. Les liaisons des tubulures du pressurieur 23 avec les tuyauteries en acier inoxydable des lignes correspondantes peuvent être réparées par le procédé de l'invention, de même que la liaison de la tubulure 22 à la ligne d'expansion.

Sur la figure 3B, on voit une partie de la cuve 24 d'un réacteur nucléaire à eau sous pression comportant une tubulure 25 de raccordement de la cuve à une canalisation primaire en acier inoxydable et éventuellement d'autres tubulures reliées à des canalisations en acier inoxydable différentes de canalisations primaires.

Sur la figure 3C, on voit la partie inférieure d'un générateur de vapeur 26 d'un réacteur nucléaire à eau sous pression constituant une boîte à eau qui est reliée par deux tubulures telles que 27 à deux canalisations du circuit primaire du réacteur en acier inoxydable.

Les liaisons soudées des tubulures 25 de la cuve 24 et des tubulures 27 du générateur de vapeur 26 peuvent être réparées par le procédé suivant l'invention.

L'invention ne se limite pas au mode de réalisation qui a été décrit.

C'est ainsi qu'il est possible de donner toute forme au tronçon de remplacement et à ses bords chanfreinés d'extrémité qui soit compatible avec la forme de la section de raccordement de la tubulure et de la tuyauterie d'expansion. Toutefois, l'extrémité de la tubulure et l'extrémité supérieure du tronçon de remplacement doivent présenter une inclinaison telle qu'on puisse réaliser une soudure hétérogène en joint étroit du tronçon de remplacement sur la tubulure.

Les soudures homogènes de liaison du tronçon de remplacement à la tuyauterie, éventuellement par l'intermédiaire d'un tronçon de fermeture peuvent être réalisées en utilisant au lieu d'un métal d'apport à base d'alliage de nickel tout métal d'apport ayant une composition différente et qui soit compatible avec les pièces à joindre.

La soudure hétérogène doit être réalisée en utilisant un alliage de nickel pour constituer le métal d'apport, aucun métal de beurrage n'étant déposé sur l'extrémité de la tubulure en acier de construction.

L'invention s'applique non seulement au cas de la réparation d'une liaison soudée entre une tubulure de pressuriseur et une tuyauterie d'expansion mais encore dans le cas de toute liaison soudée entre une pièce tubulaire en acier de construction au carbone ou faiblement allié d'un composant tel que la cuve d'un réacteur nucléaire d'un type quelconque et une tuyauterie en acier inoxydable austénitique.

## Revendications

1. Procédé de réparation d'une liaison soudée hétérogène entre une tubulure (2) d'un composant d'un réacteur nucléaire en acier de construction ferritique faiblement allié et une tuyauterie (5) en acier inoxydable austénitique, comprenant les étapes suivantes :
- on découpe et on sépare de la tubulure (2) et de la tuyauterie (5) un tronçon tubulaire de liaison comportant une partie au moins de la liaison soudée (8),
- on réalise un tronçon tubulaire de remplacement (10) en acier inoxydable austénitique ayant une longueur adaptée à la longueur axiale du tronçon de liaison,
- on soude bout à bout par un procédé de soudage à joint étroit une première extrémité du tronçon de remplacement (10) sur une extrémité libre (2a) de la tubulure (2) séparée du tronçon de liaison, de manière qu'une seconde extrémité libre (10b) du tronçon de remplacement soit disposée en vis-à-vis de l'extrémité libre laissée en attente de la tuyauterie (5), et
- on raccorde par soudage la seconde extrémité du tronçon de remplacement à l'extrémité laissée en attente de la tuyauterie (5) en acier inoxydable austénitique, pour refermer complètement l'espace entre la seconde extrémité (11b) du tronçon de remplacement et la tuyauterie (5).

2. Procédé suivant la revendication 1, caractérisé par le fait qu'on place un tronçon tubulaire de fermeture (13) en acier inoxydable austénitique entre la seconde extrémité (10b) du tronçon de remplacement (10) et l'extrémité libre laissée en attente de la tuyauterie (5) et qu'on raccorde par deux cordons de soudure homogène (14, 15) deux extrémités du tronçon de fermeture (13) disposées en vis-à-vis de la seconde extrémité (10b) du tronçon de remplacement (10) et de l'extrémité libre laissée en attente de la tuyauterie (5), respectivement au tronçon de remplacement (10) et à la tuyauterie (5).

3. Procédé suivant la revendication 1, caractérisé par le fait qu'on prévoit un tronçon de remplacement (10) ayant une longueur sensiblement égale à la longueur du tronçon de liaison découpé et séparé de la tubulure (2) et de la canalisation (5) et qu'on raccorde par une seule soudure homogène la seconde extrémité (10b) du tronçon de remplacement (10) à l'extrémité libre laissée en attente de la tuyauterie (5).

4. Procédé suivant l'une quelconque des revendications 1 à 3, caractérisé par le fait que le soudage bout à bout du tronçon de remplacement (10) et de la tubulure (2) est réalisé par remplissage par un métal d'apport d'une cavité annulaire ménagée entre un bord chanfreiné (2a) de la tubulure (2) et un bord chanfreiné (10a) du tronçon de remplacement, la cavité annulaire ayant une section méridienne dont les bords latéraux font un angle au plus égal à 5° avec un plan perpendiculaire à l'axe de la tubulure (2) et du tronçon de remplacement (10) et dont la plus grande largeur est au plus égale à 15 mm.

5. Procédé suivant la revendication 4, caractérisé par le fait que le métal d'apport est un alliage de nickel.

6. Procédé suivant l'une quelconque des revendications 4 et 5, caractérisé par le fait qu'on effectue un recuit de détensionnement du métal déposé (9) et de la zone de jonction de la tubulure (2) et du tronçon de remplacement (10) après soudage bout à bout du tronçon de remplacement (10) sur la tubulure (2).

7. Procédé suivant l'une quelconque des revendications 4, 5 et 6, caractérisé par le fait qu'on dépose dans le fond intérieur de la cavité annulaire entre la tubulure (2) et le tronçon tubulaire de remplacement (10) une couche d'alliage de nickel à forte résistance à la corrosion ou d'acier inoxydable.

8. Procédé suivant la revendication 2, caractérisé par le fait que, préalablement au raccordement par soudage du tronçon de fermeture (13), on introduit par un espace libre (12) entre la seconde extrémité (10b) du tronçon tubulaire de remplacement (10) et l'extrémité libre laissée en attente de la tuyauterie (5), un outillage de traitement thermique de la partie de la soudure (9) de jonction entre la tubulure (2) et le tronçon de remplacement (10) située du côté de la surface intérieure de la tubulure (2) et du tronçon de remplacement (10).

9. Procédé suivant l'une quelconque des revendications 1 à 8, dans le cas où une manchette thermique est disposée coaxialement à l'intérieur de la tubulure (2) dans la zone de liaison de la tubulure à la tuyauterie (5), caractérisé par le fait qu'on découpe et qu'on enlève au moins partiellement la manchette thermique avec le tronçon de liaison et qu'on réalise la réparation sans remplacement de la manchette thermique.

10. Procédé de réparation d'une liaison soudée suivant l'une quelconque des revendications 1 à 9, caractérisé par le fait que la tubulure (22) est une tubulure d'un pressuriseur (21) d'un réacteur nucléaire à eau sous pression et que la tuyauterie en acier inoxydable austénitique est la tuyauterie d'expansion du pressuriseur (21).

11. Procédé de réparation d'une liaison soudée suivant l'une quelconque des revendications 1 à 9, caractérisé par le fait que la tubulure (23) est une tubulure fixée sur le fond supérieur d'un pressuriseur (21) d'un réacteur nucléaire et que la tuyauterie en acier inoxydable austénitique est une tuyauterie d'une ligne de décharge ou d'expansion du pressuriseur (21).

12. Procédé de réparation d'une liaison soudée suivant l'une quelconque des revendications 1 à 9, caractérisé par le fait que la tubulure (27) est une tubulure d'un générateur de vapeur (26) d'un réacteur nucléaire à eau sous pression et que la tubulure en acier inoxydable austénitique est une canalisation du circuit primaire du réacteur nucléaire.

13. Procédé de réparation d'une liaison soudée suivant l'une quelconque des revendications 1 à 9, caractérisé par le fait que la tubulure (25) est une tubulure d'une cuve (24) d'un réacteur nucléaire et que la tuyauterie est une canalisation en acier inoxydable austénitique telle qu'une canalisation d'un réacteur nucléaire à eau sous pression.

## Claims

1. Process for repairing a heterogeneous welded bond between a tube (2) of a component of a nuclear reactor made of low-alloy ferritic steel and piping (5) made of austenitic stainless steel, comprising the following steps:
a tubular connecting section comprising at least part of the welded bond is cut away and removed from the tube (2) and the piping (5),
a tubular replacement section (10) of austenitic stainless steel is produced, the length of which is adapted to the axial length of the connecting section,
a first end of the replacement section (10) is butt-welded by a narrow-seam welding process to a free end (2a) of the tube (2) detached from the connecting section, so that a second free end (10b) of the replacement section is located opposite the free end left ready on the piping (5), and
the other end of the replacement section is connected by welding to the free end left ready on the piping (5) consisting of austenitic stainless steel, so as to close off entirely the space between the second end (11b) of the replacement section and the piping (5).

2. Process according to claim 1, characterised in that a tubular closing section (13) of austenitic stainless steel is placed between the second end (10b) of the replacement section (10) and the free end left ready on the piping (5) and two ends of the closing section (13) located opposite the second end (10b) of the replacement section (10) and the free end left ready on the piping (5) are connected to the replacement section (10) and to the piping (5), respectively by means of two homogeneous weld seams (14, 15).

3. Process according to claim 1, characterised in that a replacement section (10) is provided having a length substantially equal to the length of the connecting section cut off and detached from the tube (2) and piping (5) and the second end (10b) of the replacement section (10) is connected to the free end left ready on the piping (5) by a single, homogeneous weld.

4. Process according to any one of claims 1 to 3, characterised in that the butt welding of the replacement section (10) and the tube (2) is carried out by filling an annular cavity defined between a chamfered edge (2a) of the tube (2) and a chamfered edge (10a) of the replacement section with a filler metal, the annular cavity having a meridian section the side edges of which form an angle of not more than 5° with a plane perpendicular to the axis of the tube (2) and the replacement section (10) and the maximum width of which is not more than 15 mm.

5. Process according to claim 4, characterised in that the filler metal is a nickel alloy.

6. Process according to one of claims 4 and 5, characterised in that a stress-relieving anneal is carried out on the deposited metal (9) and the junction zone between the tube (2) and the replacement section (10) after butt welding of the replacement section (10) to the tube (2).

7. Process according to one of claims 4, 5 and 6, characterised in that a layer of highly corrosion-resistant nickel alloy or stainless steel is deposited in the base of the annular cavity between the tube (2) and the tubular replacement section (10).

8. Process according to claim 2, characterised in that, prior to the attachment by welding of the closing section (13), a tool for heat-treating the part of the attachment weld (9) between the tube (2) and the replacement section (10) located close to the inner surface of the tube (2) and the replacement section (10) is introduced through a free space (12) between the second end (10b) of the tubular replacement section (10) and the free end left ready on the piping (5).

9. Process according to any one of claims 1 to 8, wherein a thermal sleeve is arranged coaxially inside the tube (2) in the zone of attachment of the tube to the piping (5), characterised in that the thermal sleeve is cut away and at least partially removed with the connecting section and the repair is carried out without replacing the thermal sleeve.

10. Process for repairing a welded bond according to any one of claims 1 to 9, characterised in that that the tube (22) is a tube of a pressuriser (21) of a pressurised water nuclear reactor and that the piping made of austenitic stainless steel is the expansion piping of the pressuriser (21).

11. Process for repairing a welded bond according to any one of claims 1 to 9, characterised in that the tube (23) is a tube fixed to the upper surface of a pressuriser (21) of a nuclear reactor and the piping made of austenitic stainless steel is piping of a discharge or expansion line from the pressuriser (21).

12. Process for repairing a welded bond according to any one of claims 1 to 9, characterised in that the tube (27) is a tube of a steam generator (26) of a pressurised water nuclear reactor and in that the tube made of austenitic stainless steel is a duct of the primary circuit of the nuclear reactor.

13. Process for repairing a welded bond according to any one of claims 1 to 9, characterised in that the tube (25) is a tube of a tank (24) of a nuclear reactor and in that the piping is piping made of austenitic stainless steel, such as the piping of a pressurised water nuclear reactor.

## Patentansprüche

1. Reparaturverfahren einer heterogenen Schweißverbindung zwischen einem Stutzen (2) eines Kernreaktorbestandteils aus ferritischem, niedrig legiertem Baustahl und einer Rohrleitung (5) aus austenitischem, rostfreiem Stahl, das die folgenden Schritte aufweist:
- vom Stutzen (2) und der Rohrleitung (5) wird ein rohrförmiges Verbindungsteilstück abgeschnitten und abgetrennt, das einen Abschnitt wenigstens der Schweißverbindung(8) aufweist,
- es wird ein rohrförmiges Austauschteilstück (10) aus austenitischem, rostfreiem Stahl mit einer Länge angefertigt, die an die axiale Länge des Verbindungsteilstückes angepaßt ist,
- mittels eines Engspaltschweißverfahrens wird ein erstes Ende des Austauschteilstückes (10) stumpf an ein freies Ende (2a) des vom Verbindungsteilstück abgetrennten Stutzens (2) geschweißt, so daß ein zweites freies Ende (10b) des Austauschteilstückes gegenüber dem freien, in Bereitschaft verbliebenen Ende der Rohrleitung (5) angeordnet ist, und
- durch Schweißen wird das zweite Ende des Austauschteilstückes mit dem in Bereitschaft verbliebenen Ende der Rohrleitung (5) aus austenitischem, rostfreiem Stahl verbunden, um den Raum zwischen dem zweiten Ende (11b) des Austauschteilstückes und der Rohrleitung (5) wieder vollständig zu verschließen.

2. Verfahren nach Anspruch 1, dadurch gekennzeichnet, daß ein rohrförmiges Verschlußteilstück (13) aus austenitischem, rostfreiem Stahl zwischen dem zweiten Ende (10b) des Austauschteilstückes (10) und dem freien, in Bereitschaft verbliebenen Ende der Rohrleitung (5) angeordnet wird, und daß durch zwei homogene Schweißraupen (14, 15) zwei Enden des Verschlußteilstückes (13), die gegenüber dem zweiten Ende (10b) des Austauschteilstückes (10) und dem freiem, in Bereitschaft verbliebenen Ende der Rohrleitung (5) angeordnet sind, mit dem Austauschteilstück (10) bzw. der Rohrleitung (5) verbunden werden.

3. Verfahren nach Anspruch 1, dadurch gekennzeichnet, daß ein Austauschteilstück (10) mit einer Länge vorgesehen ist, die im wesentlichen gleich der Länge des vom Stutzen (2) und von der Rohrleitung (5) abgeschnittenen und abgetrennten Verbindungsteilstückes ist, und daß durch eine einzige homogene Schweißung das zweite Ende (10b) des Austauschteilstückes (10) mit dem freien, in Bereitschaft verbliebenen Ende der Rohrleitung (5) verbunden wird.

4. Verfahren nach einem der Ansprüche 1 bis 3, dadurch gekennzeichnet, daß die Stumpfschweißung des Austauschteilstückes (10) und des Stutzens (2) durch Füllen eines ringförmigen Hohlraumes, der zwischen einem abgeschrägten Rand (2a) des Stutzens (2) und einem abgeschrägten Rand (10a) des Austauschteilstückes ausgespart ist, mit einem Zusatzmetall durchgeführt wird, wobei der ringförmige Hohlraum einen Längsquerschnitt aufweist, dessen Seitenränder einen Winkel von höchstens 5° mit einer zur Achse des Stutzens (2) und des Austauschteilstückes (10) senkrechten Ebene einschließen und dessen größte Breite höchstens gleich 15 mm ist.

5. Verfahren nach Anspruch 4, dadurch gekennzeichnet, daß das Zusatzmetall eine Nickellegierung ist.

6. Verfahren nach einem der Ansprüche 4 und 5, dadurch gekennzeichnet, daß ein Spannungsfreiglühen des abgelagerten Metalls (9) und des Bereichs der Verbindung des Stutzens (2) und des Austauschteilstückes (10) nach Stumpfschweißung des Austauschteilstückes (10) an dem Stutzen (2) durchgeführt wird.

7. Verfahren nach einem der Ansprüche 4, 5 oder 6, dadurch gekennzeichnet, daß in dem inneren Boden des ringförmigen Hohlraumes zwischen dem Stutzen (2) und dem rohrförmigen Austauschteilstück (10) eine Schicht von einer hochkorrosionsbeständigen Nickellegierung oder von rostfreiem Stahl abgelagert wird.

8. Verfahren nach Anspruch 2, dadurch gekennzeichnet, daß vor der Verbindung durch Schweißen des Verschlußteilstückes (13) durch einen freien Raum (12) zwischen dem zweiten Ende (10b) des rohrförmigen Austauschteilstückes (10) und dem freien, in Bereitschaft verbliebenen Ende der Rohrleitung (5) ein Werkzeug zur Wärmebehandlung des Abschnittes der Verschweißung (9) der Verbindung zwischen dem Stutzen (2) und dem Austauschteilstück (10), der auf der Seite der Innenseite des Stutzens (2) und des Austauschteilstückes (10) angeordnet ist, eingeführt wird.

9. Verfahren nach einem der Ansprüche 1 bis 8, das in dem Fall, in dem eine Wärmemanschette koaxial zum Innenraum des Stutzens (2) in dem Verbindungsbereich des Stutzens mit der Rohrleitung (5) angeordnet ist, dadurch gekennzeichnet ist, daß die Wärmemanschette mit dem Verbindungsteilstück abgeschnitten und wenigstens teilweise entfernt wird und daß die Reparatur ohne Austausch der Wärmemanschette durchgeführt wird.

10. Reparaturverfahren einer Schweißverbindung nach einem der Ansprüche 1 bis 9, dadurch gekennzeichnet, daß der Stutzen (22) ein Stutzen eines Druckhalters (21) eines Druckwasserkernreaktors ist und daß die Rohrleitung aus austenitischem, rostfreiem Stahl die Entspannungsrohrleitung des Druckhalters (21) ist.

11. Reparaturverfahren einer Schweißverbindung nach einem der Ansprüche 1 bis 9, dadurch gekennzeichnet, daß der Stutzen (23) ein am oberen Boden eines Druckhalters (21) eines Kernreaktors befestigter Stutzen ist und daß die Rohrleitung aus austenitischem, rostfreiem Stahl eine Rohrleitung einer Ablaß- oder Entspannungsstrecke des Druckhalters (21) ist.

12. Reparaturverfahren einer Schweißverbindung nach einem der Ansprüche 1 bis 9, dadurch gekennzeichnet, daß der Stutzen (27) ein Stutzen eines Dampferzeugers (26) eines Druckwasserkernreaktors ist und daß der Stutzen aus austenitischem, rostfreiem Stahl eine Rohrleitung des Primärkreislaufes des Kernreaktors ist.

13. Reparaturverfahren einer Schweißverbindung nach einem der Ansprüche 1 bis 9, dadurch gekennzeichnet, daß der Stutzen (25) ein Stutzen eines Kernreaktorbehälters (24) ist und daß die Rohrleitung eine Rohrleitung aus austenitischem, rostfreiem Stahl ist, wie beispielsweise eine Rohrleitung eines Druckwasserkernreaktors.
